# EUROPÄISCHE PATENTSCHRIFT

(11) **EP 3 004 837 B1**
(45) Veröffentlichungstag und Bekanntmachung des Hinweises auf die Patenterteilung: **10.04.2019**
(21) Anmeldenummer: 14727182.9
(22) Anmeldetag: 21.05.2014
(51) Int. Cl.: G01N 15/06, F01N 11/00

(54) **VERFAHREN ZUM BETREIBEN EINES PARTIKELSENSORS**
METHOD FOR OPERATING A PARTICLE SENSOR
PROCÉDÉ POUR FAIRE FONCTIONNER UN CAPTEUR DE PARTICULES

(30) Priorität: 28.05.2013 DE 102013209872
(43) Veröffentlichungstag der Anmeldung: 13.04.2016
(73) Patentinhaber: Robert Bosch GmbH, 70442 Stuttgart (DE)
(72) Erfinder: GAERTNER, Benjamin, 76149 Neureut (DE); TIEFENBACH, Andy, 71665 Vaihingen-Horrheim (DE); KLENK, Mathias, 72074 Tuebingen (DE)
(86) Internationale Anmeldenummer: PCT/EP2014/060403
(87) Internationale Veröffentlichungsnummer: WO 2014/191270

(56) Entgegenhaltungen:
- WO-A1-2013/189806
- DE-A1-102009 028 239
- DE-A1-102009 028 283

## Beschreibung

### Stand der Technik

Die Erfindung betrifft ein Verfahren nach Anspruch 1 zum Betreiben eines Partikelsensors zur Bestimmung eines Partikelgehalts in einem Gasstrom.

Partikelsensoren werden heute beispielsweise zur Überwachung des Rußausstoßes von Brennkraftmaschinen und zur On Bord Diagnose (OBD), beispielsweise zur Funktionsüberwachung von Partikelfiltern, eingesetzt. Dabei sind sammelnde, resistive Partikelsensoren bekannt, die eine Änderung der elektrischen Eigenschaften einer interdigitalen Elektrodenstruktur aufgrund von Partikelanlagerungen auswerten. Es können zwei oder mehrere Elektroden vorgesehen sein, die bevorzugt kammartig ineinander greifen. Diese werden auch als Interdigitalelektroden (IDE) bezeichnet. Durch eine steigende Anzahl an dem Partikelsensor anlagernder Partikel werden die Elektroden kurzgeschlossen, was sich in einem mit steigender Partikelanlagerung abnehmendem elektrischen Widerstand, einer abnehmenden Impedanz oder in einer Veränderung einer mit dem Widerstand beziehungsweise der Impedanz zusammen hängenden Kenngröße wie einer Spannung und/ oder einem Strom auswirkt. Zur Auswertung wird im Allgemeinen ein Schwellwert, beispielsweise eines Messstroms zwischen den Elektroden, festgelegt und die Zeit bis zur Erreichung des Schwellwertes als Maß für die angelagerte Partikelmenge verwendet. Alternativ kann auch eine Signal-Änderungsgeschwindigkeit während der Partikelanlagerung ausgewertet werden. Ist der Partikelsensor voll beladen, werden die angelagerten Partikel in einer Regenerationsphase mit Hilfe eines in dem Partikelsensor integrierten Heizelements verbrannt.

Ein solcher resistiver Partikelsensor ist in der DE 101 33 384 A1 beschrieben. Der Partikelsensor ist aus zwei ineinander greifenden, kammartigen Elektroden aufgebaut, die zumindest teilweise von einer Fanghülse überdeckt sind. Lagern sich Partikel aus einem Gasstrom an dem Partikelsensor ab, so führt dies zu einer auswertbaren Änderung der Impedanz des Partikelsensors, aus der auf die Menge angelagerter Partikel und somit auf die Menge im Abgas mitgeführter Partikel geschlossen werden kann.

Beim resistiven Partikelsensor basiert die Eigendiagnose der Interdigitalelektroden (IDE) auf einer Strommessung bei erhöhten Temperaturen. Durch die Anwesenheit von Natrium-Ionen in der Isolationsschicht unter der Elektrode ist dabei eine gewisse, messbare elektrische Leitfähigkeit gegeben. Deshalb wird diese Diagnose während der Sensorregeneration durchgeführt, wo ohnehin eine aktive Heizung vorgenommen wird und Temperaturen > 750° C erreicht werden. Die negative IDE-Elektrode (IDE-) liegt nach dem Stand der Technik in dieser Phase auf Masse und die positive IDE-Elektrode (IDE+) bis auf die kurze Diagnosephase ebenfalls, weshalb der positive Heizelementanschluss sowie Teile des Heizelements im Betrieb immer ein dazu positives elektrisches Potential aufweisen.

Da die Regeneration, in der Rußpartikel verbrannt werden, typischerweise über viele Sekunden bis Minuten andauert, erfahren positiv geladene Teilchen, wie insbesondere die Na⁺-Ionen für diese, längere Zeit eine treibende Kraft vom Inneren des Sensors, wo sich das Heizelement befindet, hin zur Oberfläche, wo die IDE-Elektroden liegen. Infolge der hohen Sensortemperatur während dieser Phase weisen die Na⁺-Ionen eine große Mobilität auf und wandern nach oben zur Oberfläche des Partikelsensors. Weiterhin erfahren die Na⁺-Ionen an der Oberfläche und in oberflächennahen Schichten eine treibende Kraft hin zur negativen IDE-Elektrode (IDE-) während Phasen, in denen ein positives Potential an der positiven IDE-Elektrode (IDE+) anliegt und die Sensortemperatur noch hoch ist. Dies ist der Fall während der Eigendiagnose selbst sowie zu Beginn einer Messphase, wobei hier die Sensortemperatur geringer ist als während der Regeneration.

An der Oberfläche, dabei verstärkt in der Umgebung der negativen IDE-Elektrode (IDE-), kommt es letztlich zu einer Konzentration der Na⁺-Ionen. Abgaskondensat bzw. Wasser, das bei Motorstart vor Taupunktende (TPE) den Sensor durchspült oder beim Abkühlen der Abgasanlage auf den Elektroden kondensiert, wäscht insbesondere bei Kaltstarts die Ionen oder daraus entstandene Natriumverbindungen heraus. Durch nachfolgende Temperaturanstiege im Sensorbetrieb kommt es zum Abdampfen, was letztlich zum Verlust der nur in begrenztem Umfang vorliegenden Na⁺-Ionen führt. Da prinzipbedingt diese Sensorregeneration und die Eigendiagnose periodisch erfolgt und somit häufig auftritt, ist eine entsprechende Alterung zu erwarten, die möglicherweise zu einem Ausfall der gesetzlich vorgeschriebenen Eigendiagnosemöglichkeit der Elektroden innerhalb der vorgesehenen Lebensdauer führen kann. Somit kann die Wanderung der Na⁺-Ionen zur Elektrode, dabei insbesondere zur negativen IDE-Elektrode (IDE-), und letztlich deren Verlust über die Lebensdauer nicht verhindert werden. Umgekehrt ist es auch möglich, dass Na⁺-Ionen im Falle von Systemen mit Abgasanlagen, in denen Na⁺-reiche Abgaskondensate auftreten, in das Sensorelement eingetragen und dort angereichert werden. Mit zunehmender Menge stören die Na⁺-Ionen. In ungünstigen Fällen kann dies zum Erkennen eines Nebenschlusses führen und somit zu einem Sensordefekt. Andere Ionen, wie z.B. K⁺-Ionen können ebenfalls zum gleichen Effekt führen und entsprechend behandelt werden.

In einer nachfolgenden Sensorgeneration basiert die Sensoreigendiagnose nicht mehr auf Basis der Na⁺-Ionenleitung sondern auf einer elektronischen Leitfähigkeit. Diese wird durch Dotieren der Isolationsschicht unter den IDE-Elektroden mit Eisen in der Sensorherstellung erzielt und ist im Betrieb bei vergleichbaren Temperaturen messbar. In diesem Fall sind dennoch Ionen in diesen Schichten enthalten und können stören, insbesondere wenn zusätzlich wie oben beschrieben zusätzlicher Ioneneintrag von außen erfolgt.

In der DE 10 2009 028 239 A1 sind ein Verfahren und eine Vorrichtung zur Diagnose eines sammelnden Partikelsensors mit einem Substrat, zwei Interdigitalelektroden und einem Heizelement beschrieben. Die Diagnose erfolgt bei hohen Temperaturen über eine Strommessung zwischen den Elektroden, wobei der Stromfluss durch eine unter den Elektroden angeordnete halbleitende Schicht erfolgt. Der Ladungstransport selbst erfolgt über bewegliche Ionen, insbesondere über Natriumionen, welche durch Verunreinigungen beim Herstellprozess oder durch gezielte Dotierung in das Substrat eingebracht werden und die halbleitende Schicht bilden. Die Diagnose erfolgt in einer Ausführung mit Wechselspannung, was eine Polarisation ausschließt. Bei Verwendung einer Gleichspannung ist auf die Abnahme der Leitfähigkeit durch Polarisationseffekte nachgewiesen. Zur Regeneration ist eine nachfolgende Temperaturbehandlung vorgesehen, durch die wieder eine gleichmäßige Verteilung der Ionen erhalten wird. Weiterhin ist vorgeschlagen, einen Umladepuls von 1 bis 1000 ms Dauer bei etwa -10 V DC Spannung aufzuprägen, um eine aktive Regeneration zu erzielen. Das beschriebene Verfahren bezieht sich dabei auf die Diagnosephase. DE 10 2009 028 239 A1 offenbart die Präambel des Anspruchs 1.

Es ist daher Aufgabe der Erfindung, während Phasen, in denen der Partikelsensor sich nicht im Messmodus befindet, aber erhöhte Temperaturen aufweist, also insbesondere während der Sensorregeneration, neue Betriebsarten bzw. -phasen einzuführen, um gezielt die Na⁺-Ionen zu verschieben, um einen Verlust dieser Ionen zu verhindern oder im Falle eines Überangebots von Na⁺-Ionen im Sensorelement in der näheren Umgebung der IDE-Elektroden diese gezielt wegzuschieben, vorzugsweise dauerhaft tief in den Bulk oder an die Oberfläche gezielt zu einer Elektrode.

Es ist weiterhin Aufgabe der Erfindung, eine zur Durchführung des Verfahrens entsprechende Vorrichtung, insbesondere eine Steuer- und Auswerteeinheit, bereitzustellen.

### Offenbarung der Erfindung

Die das Verfahren betreffende Aufgabe wird in dem Verfahren nach Anspruch 1 dadurch gelöst, dass während der Regenerationsphase zusätzliche Betriebsphasen eingeführt werden, in denen außerhalb der Diagnosephase durch zeitweises Anlegen bestimmter, von Null Volt verschiedener Spannungspotentiale an die IDE-Elektroden gezielt Ionen verschoben werden. Mit dem vorgestellten Verfahren können gezielt Kationen, insbesondere Na⁺-Ionen, verschoben werden, um deren Verlust über die Lebensdauer infolge von Auswaschprozessen währen des Betriebs zu verhindern oder im Falle eines erhöhten Eintrags von Na⁺-Ionen z.B. über das Abgaskondensat in das Element diese gezielt in Bereiche zu schieben, wo sie nicht stören. Damit kann die Lebensdauer der Partikelsensoren verlängert werden. Zudem können zumindest zeitweise, als Vorbereitung der Diagnosephase, Ionenkonzentrationen in den oberflächennahen Bereichen der IDE-Elektroden geschaffen werden, so dass eine Eigendiagnose des Partikelsensors störungsfrei durchgeführt werden kann. Weiterhin kann bei einem Überangebot an Ionen im Bereich unter den Elektroden eine ungewollt hohe ionische Leitfähigkeit und somit eine Sensorfehlfunktion verhindert werden.

Wird, wie dies eine bevorzugte Verfahrensvariante vorsieht, für eine bestimmte, vorgebbare Zeit während einer Umpolarisierungsphase zeitlich vor der Diagnosephase ein positives Spannungspotential an die negative IDE-Elektrode angelegt, wobei die positive IDE-Elektrode auf einem Masse-Potential liegt, kann erreicht werden, dass durch diese Elektrodenumpolung Na⁺-Ionen, die prinzipbedingt während der Eigendiagnose zur negativen Elektrode getrieben werden bzw. sich dort bisher konzentrieren, wieder zur sonst positiven Elektrode verschoben werden. Dies ist vorteilhaft, wenn dies kurz vor der Diagnosephase geschieht, um einen Polarisationseffekt zu vermeiden, der ansonsten die Eigendiagnose negativ beeinflussen kann. Durch die Länge der Umpolarisierungsphase kann die Verteilung der Na⁺-Ionen gezielt eingestellt werden.

Um jedoch nicht die Gesamtzykluszeit des Partikelsensors signifikant zu verlängern, sollten nur kurzzeitige Umpolarisierungsphasen von max. 1 s vorgegeben werden. Infolge der geringen Abstände der Elektrodenfinger reicht diese Zeitdauer im Allgemeinen aus. Da sich die Rückpolarisation und die Polarisation während der Diagnosephase im Idealfall kompensieren sollen, ist es von Vorteil, wenn eine Zeitdauer für die Umpolarisierungsphase gewählt wird, die maximal der Zeitdauer der Diagnosephase entspricht.

In dem Verfahren nach Anspruch 1 ist vorgesehen, dass in weiteren Betriebsphasen während der Regenerationsphase außerhalb der Diagnosephase und der Umpolarisierungsphase die elektrischen Potentiale der IDE-Elektroden gleich hoch oder höher als eine Heizelement-Spannung (typischerweise liegt diese zwischen +8 und +13 V) eingestellt werden. Diese weiteren Betriebsphasen können alternativ zur Umpolarisierungsphase oder in Kombination mit dieser angewendet werden. Damit erfahren die Ionen, insbesondere die leicht verschiebbaren Na⁺-Ionen in den Schichtbereichen zwischen den IDE-Elektroden und dem Heizelement, welche für Diagnosezwecke wichtig sind, eine treibende Kraft in die umgekehrte Richtung und können gegenüber dem Stand der Technik mit dieser Maßnahme in den Bulk des Partikelsensors zurückgetrieben werden. Über die Höhe der Spannung und die Zeitdauer kann die Eindringtiefe der Ionen bzw. die Verteilung im Bulk eingestellt werden.

Dabei kann vorgesehen sein, dass während dieser Betriebsphasen die negative IDE-Elektrode zwischen einem floatenden und einem gegenüber der positiven Heizelement-Spannung höheren Spannungspotential umschaltbar ist und die positive IDE-Elektrode während dieser Zeitdauer mit einem gegenüber der positiven Heizelement-Spannung gleich hohen oder höherem Spannungspotential betrieben wird. Damit kann das Alterungsverhalten, wie es eingangs beschrieben wurde, durch die damit mögliche Minimierung der Konzentration an Na⁺-Ionen an der Sensoroberfläche im Bereich der IDE-Elektroden positiv beeinflusst werden. Weiterhin gibt es keine negativen Auswirkungen auf das Ergebnis der Eigendiagnose während der Diagnosephase. Es kann damit sogar eine Vorkonditionierung hinsichtlich optimaler Ionenkonzentrationsverhältnisse für die Diagnosephase erreicht werden.

Es hat sich als vorteilhaft erwiesen, wenn das Spannungspotential an der positiven IDE-Elektrode zwischen +8 bis +13 Volt, was der typischen Heizelement-Spannung entspricht, oder größer +40 V, typisch +45,6 V beträgt.

Eine bevorzugte Verfahrensvariante sieht vor, dass die Spannungspotentiale an den IDE-Elektroden mit Ausnahme der Diagnosephase und der Umpolarisierungsphase während der gesamten Regenerationsphase oder zeitweise angelegt werden. Über die Zeitdauer der eingestellten Potentialverhältnisse kann die Verteilung im Bulk des Partikelsensors gezielt eingestellt werden. Da die Freibrennphase typischerweise viele Sekunden bis Minuten dauert, können diese Betriebsphasen während der Regenerationsphase des Partikelsensors lange angewendet werden.

Bei einer Betriebsvariante kann vorgesehen sein, dass die zusätzlichen Betriebsphasen innerhalb der Regenerationsphase des Partikelsensors hinsichtlich der an die IDE-Elektroden angelegten Spannungspotentiale und der Zeitdauer fest vorgegeben oder in Abhängigkeit des aktuellen Zustandes der IDE-Elektroden adaptiert werden. Da der Diagnosestrom während der Diagnosephase auf Ladungsträgern basiert, die bei höheren Temperaturen eine gute Beweglichkeit aufweisen, wie dies insbesondere bei den Na⁺-Ionen der Fall ist, kann z.B. in Abhängigkeit von seiner aktuellen Höhe oder seiner Veränderung über die Lebensdauer durch eine gezielte Veränderung der IDE-Potentiale dieser erniedrigt, erhöht oder konstant gehalten werden. Insbesondere kann mit dieser Adaption einem über die Lebensdauer sinkenden Diagnosestrom entgegen gesteuert werden oder bei einem Überangebot an Ionen einer Sensorfehlfunktion verhindert werden.

Eine bevorzugte Anwendung des Verfahrens und seiner Varianten, wie sie zuvor beschrieben wurden, sieht den Betrieb eines Partikelsensors im Rahmen einer On-Board-Diagnose des Partikelsensors, der im Abgasstrang einer als Diesel-Motor oder als Otto-Motor ausgeführten Brennkraftmaschine zur On-Board-Diagnose eines Partikelfilters angeordnet ist oder zur Messung von Ruß-Rohemissionen verwendet wird, vor. In dieser Anwendung kommt es insbesondere auf eine genaue und reproduzierbare Diagnose der Partikelbeladung des im Abgasstrang der Diesel-Brennkraftmaschine angeordneten Rußpartikelfilters (DPF) an. Zum einen kann einer vorschnellen Alterung des Partikelsensors infolge von Auswaschungen der Na⁺-Ionen entgegen gewirkt werden. Andererseits können optimale Konzentrationsbedingungen für die Eigendiagnose des Partikelsensors erzielt werden. Alterungseffekte bei der Diagnosestrommessung können damit kompensiert bzw. minimiert werden. Derartige Betriebsphasen können auch bei Verbrennungsanlagen angewendet werden, bei denen mit einem Partikelsensor eine Ruß-Konzentration bzw. -Beladung überwacht werden muss und zur Funktionskontrolle des Partikelsensors eine Eigendiagnose der Funktionstüchtigkeit vorgesehen ist.

Die die Vorrichtung betreffende Aufgabe wird dadurch gelöst, dass die Steuer- und Auswerteeinheit Einrichtungen, wie eine IDE-Versorgungseinheit, eine IDE-Messeinheit, eine Heizelement-Versorgungseinheit und eine Temperatur-Messeinheit, zur Durchführung des Verfahrens gemäß dem zuvor beschriebenen Verfahren und seinen aufgeführten Verfahrensvarianten aufweist. Üblicherweise sind diese Einrichtungen bereits in Steuer- und Auswerteeinheiten gemäß dem Stand der Technik vorhanden. Vorteilhaft ist hierbei, dass zur Durchführung des Verfahrens keine Hardwareänderung am Partikelsensor oder an der Steuer- und Auswerteeinheit vorgenommen werden muss. Diese zusätzliche Funktionalität kann ausschließlich durch eine Softwareergänzung realisiert werden. Die Steuer- und Auswerteeinheit kann dabei als eigenständige Einheit oder als integraler Bestandteil einer übergeordneten Motorsteuerung ausgeführt sein.

Die Erfindung wird im Folgenden anhand eines in den Figuren dargestellten Ausführungsbeispiels näher erläutert. Es zeigen:
Figur 1 in einer schematischen Darstellung das technische Umfeld, in der das Verfahren angewendet werden kann,
Figur 2 schematisch einen Partikelsensor in einer Explosionsdarstellung,
Figur 3 eine Steuer- und Auswerteeinheit, an die der Partikelsensor angeschlossen ist und
Figur 4 bis 9 Verlaufsdiagramme für verschiedene Betriebsmodi des Partikelsensors.

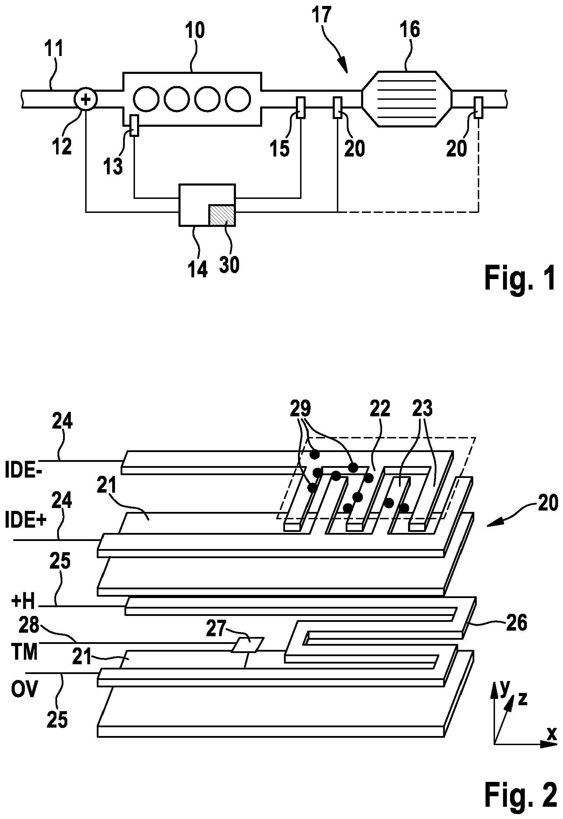

Figur 1 zeigt schematisch das technische Umfeld, in dem das erfindungsgemäße Verfahren angewendet werden kann. Eine Brennkraftmaschine 10, die als Dieselmotor ausgeführt sein kann, bekommt Verbrennungsluft über eine Luftzuführung 11 zugeführt. Dabei kann die Luftmenge der Verbrennungsluft mittels eines Luftmassenmessers 12 in der Luftzuführung 11 bestimmt werden. Die Luftmenge kann bei einer Korrektur einer Anlagerungswahrscheinlichkeit von im Abgas der Brennkraftmaschine 10 vorhandenen Partikeln verwendet werden. Das Abgas der Brennkraftmaschine 10 wird über einen Abgasstrang 17 abgeführt, in dem eine Abgasreinigungsanlage 16 angeordnet ist. Diese Abgasreinigungsanlage 16 kann als Diesel-Partikelfilter ausgeführt sein. Weiterhin sind im Abgasstrang 17 eine als Lambdasonde ausgeführte Abgassonde 15 und ein Partikelsensor 20 angeordnet, deren Signale einer Motorsteuerung 14 oder einer speziellen Steuer- und Auswerteeinheit 30 (Sensor Control Unit SCU) zugeführt werden, die Bestandteil der Motorsteuerung 14 oder als eigenständige Einheit ausgeführt sein kann. Die Motorsteuerung 14 ist weiterhin mit dem Luftmassenmesser 12 verbunden und bestimmt auf Basis der ihr zugeführten Daten eine Kraftstoffmenge, die über eine Kraftstoff-Dosierung 13 der Brennkraftmaschine 10 zugeführt werden kann.

Der Partikelsensor 20 kann dabei auch in Strömungsrichtung des Abgases hinter der Abgasreinigungsanlage 16 angeordnet sein, was Vorteile hinsichtlich einer Homogenisierung der Abgasströmung an dieser Stelle mit sich bringt und insbesondere beim Einsatz im Rahmen der On-Board-Diagnose der Fall ist. Mit den gezeigten Vorrichtungen ist eine Beobachtung des Partikelausstoßes der Brennkraftmaschine 10 und eine Prognose der Beladung der als Diesel-Partikelfilter (DPF) ausgebildeten Abgasreinigungsanlage 16 möglich.

Figur 2 zeigt in einer schematischen Darstellung einen Partikelsensor 20 entsprechend dem Stand der Technik in einer Explosionsdarstellung.

Auf Isolierträgerschichten 21, beispielsweise aus Aluminiumoxid, ist eine IDE-Messstruktur 22 in Form einer ersten Elektrode und einer zweiten Elektrode aufgebracht. Die Elektroden sind in Form zweier interdigitaler, ineinander greifender Kammelektroden ausgeführt und werden als IDE-Elektroden 23 bezeichnet. An den stirnseitigen Enden der IDE-Elektroden 23 sind die IDE-Anschlüsse 24 (IDE+ und IDE-) vorgesehen, über welche die IDE-Elektroden 23 zur Spannungsversorgung und zur Durchführung der Messung mit der Steuer- und Auswerteeinheit 30 (in Figur 2 nicht dargestellt) verbunden sind. Zusätzlich ist im gezeigten Beispiel zwischen den Isolierträgerschichten 21 ein Heizelement 26 integriert, welches über zusätzliche HeizelementAnschlüsse 25 (H+, OV) mit der Steuer- und Auswerteeinheit 30 verbunden ist.

Zur Messung der Temperatur kann zusätzlich ein Temperatursensor 27 im Schichtaufbau des Partikelsensors 20 vorgesehen sein, wobei zusätzlich ein Temperatursensor-Anschluss 28 (TM) aus dem Partikelsensor 20 herausgeführt ist. Als Temperatursensor 27 können beispielswiese Widerstandsstrukturen aus Platin zum Einsatz kommen. Alternativ kann auch zumindestens ein Teil der Struktur des Heizelements 26 als Temperatursensor 27 genutzt werden. Zur Orientierung von Ionenwanderungen innerhalb verschiedener Betriebsarten ist zudem in Figur 2 ein Koordinatensystem schematisch dargestellt.

Wird ein solcher Partikelsensor 20 in einem Rußpartikel 29 führenden Gasstrom, beispielsweise in einem Abgaskanal eines Dieselmotors oder einer Feuerungsanlage, betrieben, so lagern sich Rußpartikel 29 aus dem Gasstrom an dem Partikelsensor 20 ab. Diese besitzen eine gewisse elektrischen Leitfähigkeit. Dabei hängt die Ablagerungsrate der Rußpartikel 29 an den Partikelsensor 20 neben der Partikelkonzentration in dem Abgas unter anderem auch von der Spannung ab, welche an den IDE-Elektroden 23 anliegt. Durch die anliegende Spannung wird ein elektrisches Feld erzeugt, welches auf elektrisch geladene Rußpartikel 29 eine entsprechende Anziehung ausübt. Durch geeignete Wahl der an den IDE-Elektroden 23 anliegenden Spannung kann daher die Ablagerungsrate der Rußpartikel 29 beeinflusst werden.

In dem Ausführungsbeispiel sind die IDE-Elektroden 23 und die oberste Isolationsträgerschicht 21, auf der sich die IDE-Elektroden 23 befinden, mit einer Schutzschicht überzogen. Diese optionale Schutzschicht schützt die IDE-Elektroden 23 bei den zumeist vorherrschenden hohen Betriebstemperaturen des Partikelsensors 20 vor Korrosion. Sie ist in dem vorliegenden Ausführungsbeispiel aus einem Material mit einer geringen Leitfähigkeit hergestellt, kann jedoch auch aus einem Isolator gefertigt sein.

Auf der Schutzschicht haben sich Rußpartikel 29 aus dem Gasstrom in Form einer Schicht abgelagert. Durch die gering leitfähige Schutzschicht bilden die Rußpartikel 29 einen leitfähigen Pfad zwischen den IDE-Elektroden 23, so dass sich, abhängig von der Menge der abgelagerten Rußpartikel 29, eine Widerstandsänderung zwischen den IDE-Elektroden 23 ergibt. Diese kann zum Beispiel gemessen werden, in dem eine konstante Spannung an die IDE-Anschlüsse 24 der IDE-Elektroden 23 angelegt und die Änderung des Stromes durch die angelagerten Rußpartikel 29 bestimmt wird. Ist die Schutzschicht isolierend aufgebaut, führen die abgelagerten Rußpartikel 29 zu einer Änderung der Impedanz des Partikelsensors 20, was durch eine entsprechende Messung, bevorzugt mit einer Wechselspannung, ausgewertet werden kann.

Ist der Partikelsensor 20 soweit mit einer Schicht aus Rußpartikeln 29 belegt, dass zusätzlich angelagerte Rußpartikel 29 zu keiner zusätzlichen Änderung des Widerstandes beziehungsweise der Impedanz des Partikelsensors 20 führen, so wird der Partikelsensor 20 innerhalb einer Regenerationsphase regeneriert. Dazu wird der Partikelsensor 20 mit Hilfe des Heizelements 26 so weit aufgeheizt, dass die anliegenden Rußpartikel 29 verbrennen. In einer ersten Phase nach der Regeneration, wenn nur wenige Rußpartikel 29 an dem Partikelsensor 20 anliegen, ist keine aussagekräftige Widerstands- oder Impedanzmessung möglich. Erst nach einer ausreichend langen Zeit liegen wieder so viele Rußpartikel 29 an dem Partikelsensor 20 an, dass sich über die Rußpartikel 29 ein geschlossener Strompfad zwischen den IDE-Elektroden 23 ausbildet und eine Messung möglich wird. Bekannte Auswerteverfahren bestimmen die Zeit nach einer Regeneration bis zur Erreichung einer vorgegebenen Schwelle des Messsignals, beispielsweise eines vorgegebenen Stromwertes, um eine Aussage über die Partikelkonzentration in dem Gasstrom zu ermitteln. Alternative Verfahren nutzen die Signal-Änderungsgeschwindigkeit nach Erreichen eines Mindestsignals zur Bestimmung der Partikelkonzentration.

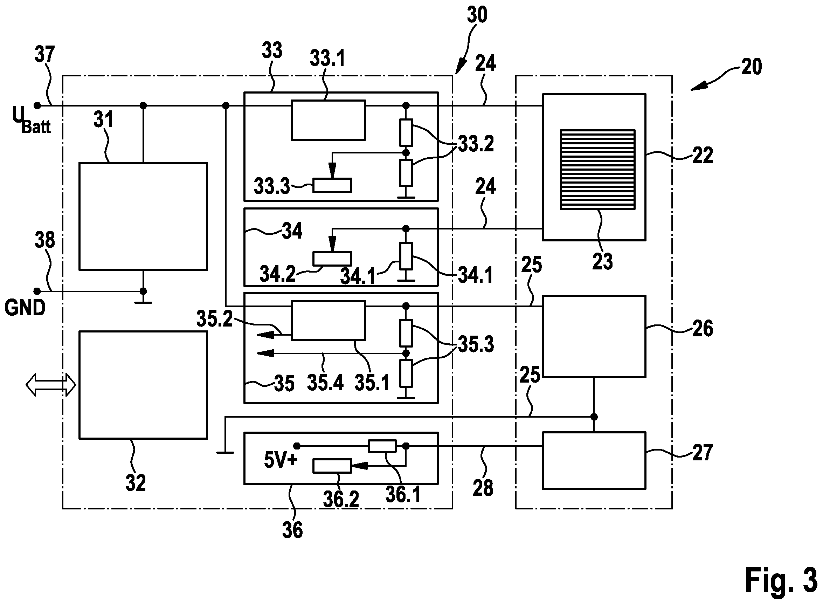

In Figur 3 ist in einer Blockdarstellung das Zusammenwirken der Steuer- und Auswerteeinheit 30 mit dem Partikelsensor 20 schematisch dargestellt.

Die Steuer- und Auswerteeinheit 30 (SCU) weist als wesentliche Funktionsblöcke eine Spannungsüberwachungseinheit 31, ein CAN-Bus-Interface 32, eine IDE-Versorgungseinheit 33, eine IDE-Messeinheit 34, eine Heizelement-Versorgungseinheit 35 sowie eine Temperatur-Messeinheit 36 auf und wird mittels einer Versorgungsspannung 37 U_{batt} und einer Masse 38 mit Strom versorgt.

Im Partikelsensor 20 sind schematisch die IDE-Messstruktur 22, das Heizelement 26 und der Temperatursensor 27 dargestellt, wobei die IDE-Messstruktur 22 mit ihren Interdigitalelektroden über die IDE-Anschlüsse 24 mit der IDE-Versorgungseinheit 31 sowie IDE-Messeinheit 34 und das Heizelement 26 über die Heizelementanschlüsse 25 mit der Heizelement-Versorgungseinheit 35 verbunden sind. Der Temperatursensor 27 ist über dem Temperatursensor-Anschluss 28 mit der Temperatur-Messeinheit 36 verbunden, wobei sich das Heizelement 26 und der Temperatursensor 27 einen gemeinsammen Masseanschluss teilen.

Die IDE-Versorgungseinheit 33 weist eine IDE-Spannungsquelle 33.1, mit der das Potential der einen IDE-Elektrode 23 eingestellt werden kann, sowie einen Spannungsteiler 33.2 auf, über den das Potential dieser IDE-Elektrode 23 mittels eines Analog-Digital-Converters 33.3 gemessen, digitalisiert und in einem hier nicht dargestellten µ-Controller zugeführt werden kann. Die IDE-Messeinheit 34 weist einen Eingangswiderstand 34.1 auf, über den das Potential der anderen IDE-Elektrode 23 der IDE-Meßstruktur 22 mittels eines anderen Analog-Digital-Converters 34.2 gemessen, digitalisiert und dem µ-Controller zur weiteren Bearbeitung zugeführt werden kann.

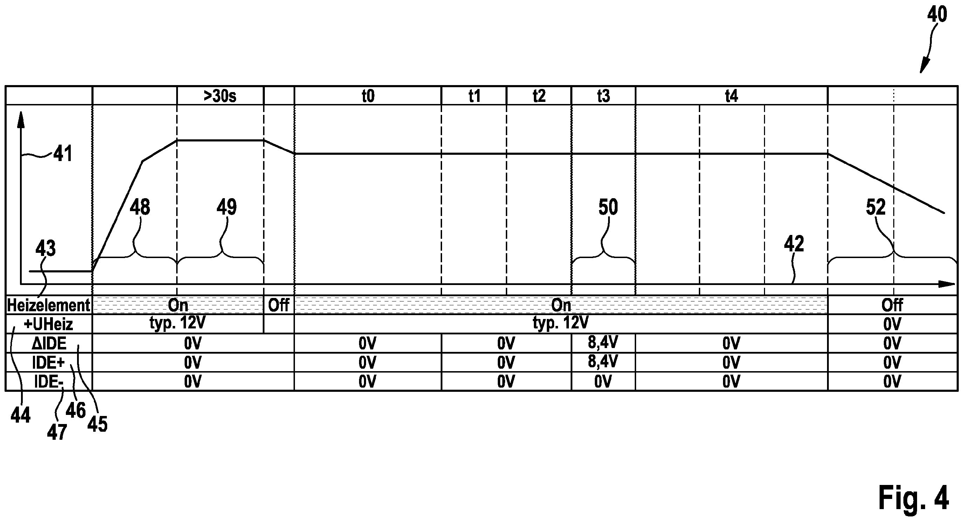

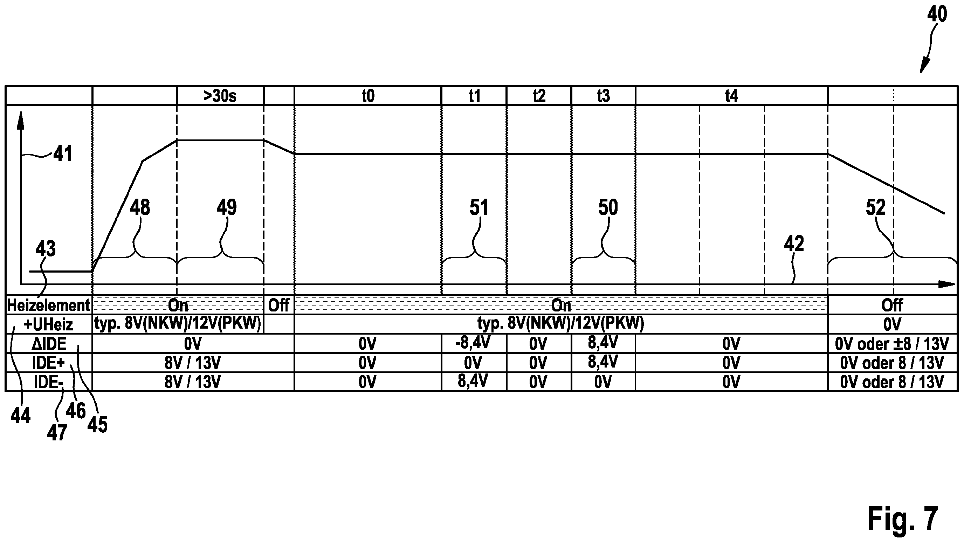

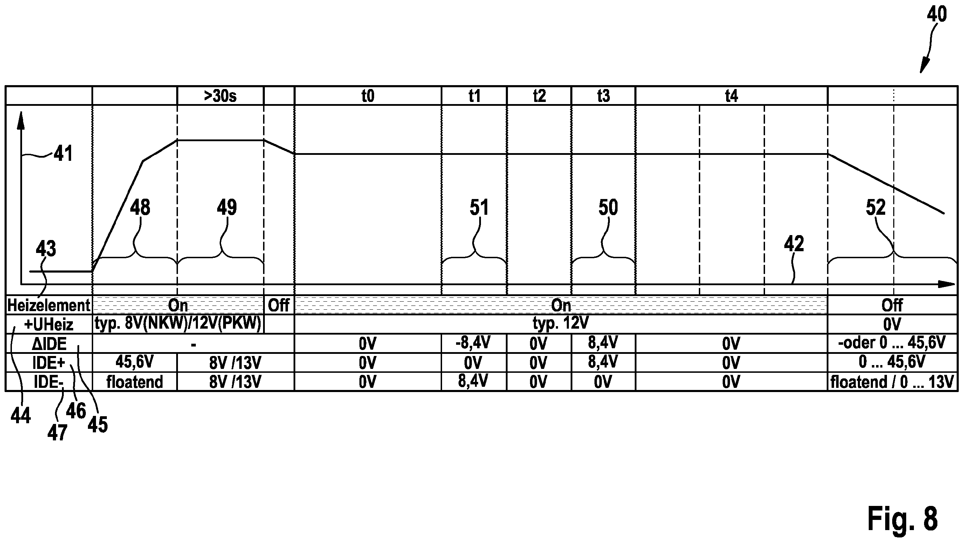

Die Heizelement-Versorgungseinheit 35 weist einen Schalter 35.1 auf, mit dem das Heizelement 26 geschaltet werden kann. Der Schalter 35.1 besitzt zusätzlich einen ADC-Signalausgang 35.2, über den ein Heizelementstatus 43 (siehe Figur 4 bis 9) mittels eines weiteren Analog-Digital-Converters erfassbar ist. Zusätzlich ist vorgesehen, dass die Heizelementspannung U_{H} über einen weiteren Spannungsteiler 35.3 gemessen und der Messwert über einen µC-Signalausgang 35.4 dem µ-Controller zur Auswertung zugeführt werden kann.

Die Temperatur-Messeinheit 36 weist eine konstante Spannungsversorgung (z.B. +5 V) auf. Ein Messwiderstand 36.1 bildet mit dem Temperatursensor 27 des Partikelsensors 20 einen temperaturabhängigen Spannungsteiler, wobei das Spannungspotential zwischen diesen Widerständen einem weiteren Analog-Digital-Converter 36.2 zur Digitalisierung und Weiterverarbeitung im µ-Controller zugeführt wird.

Die Figuren 4 bis 9 zeigen in verschiedenen Verlaufsdiagrammen 40 den Verlauf der Temperatur 41 des Partikelsensors 20 in Abhängigkeit der Zeit 42 für einen typischen Regenerationszyklus des Partikelsensors 20 auf. Zudem sind in einem tabellarischen Bereich der Figuren 4 bis 9 für verschiedene Zeitabschnitte jeweils ein Heizelementstatus 43, d.h. ob das Heizelement 26 des Partikelsensors 20 ein- oder ausgeschaltet ist, eine Heizelement-Spannung 44 sowie eine IDE-Spannungsdifferenz 45 zwischen den IDE-Elektroden 23 und die jeweiligen Elektrodenpotentiale IDE+ und IDE- 46, 47 aufgezeigt, wobei hinsichtlich der Zeitabschnitte zwischen einer Aufheizphase 48, einer Haupt-Rußverbrennungsphase 49, einer Diagnosephase 50 und einer neu eingeführten Umpolarisierungsphase 51 und einer Abkühlphase 52 unterschieden wird.

Figur 4 zeigt im Verlaufsdiagram 40 den Temperaturverlauf sowie die verschiedenen Potentiale gemäß dem Stand der Technik. Hierbei ergeben sich beispielsweise für eine Anwendung in einem PKW die elektrischen Potentiale an den IDE-Elektroden 23 sowie am Heizelement 26 während der Regeneration bis zum Beginn der eigentlichen Ruß-Sammelphase, wie sie in Figur 4 dargestellt sind. Es wird deutlich, dass das Heizelementpotential, die Heizelement-Spannung 44 (typ. 12 V), bis auf ganz kurze Phasen immer höher ist, als die beiden Elektrodenpotentiale IDE+, IDE- 46, 47, welche innerhalb der Diagnosephase einen typischen Wert von +8,4 V an der IDE+-Elektrode annehmen kann. Es wird weiterhin deutlich, dass es lange Phasen gibt mit einer für die Na⁺-Ionen treibenden Kraft zur Oberfläche sowie kürze Phasen mit einer treibenden Kraft zur negativen Elektrode während der Diagnosephase 50, die sich beide zyklisch wiederholen.

Mit dem erfindungsgemäßen Verfahren werden mit Hilfe zusätzlicher Software-Module innerhalb der Steuer- und Auswerteeinheit 30 (SCU) weitere Betriebsphasen des Partikelsensors 20 eingeführt, ohne dass die bestehende Hardware, wie sie in Figur 3 schematisch dargestellt ist, angepasst werden muss.

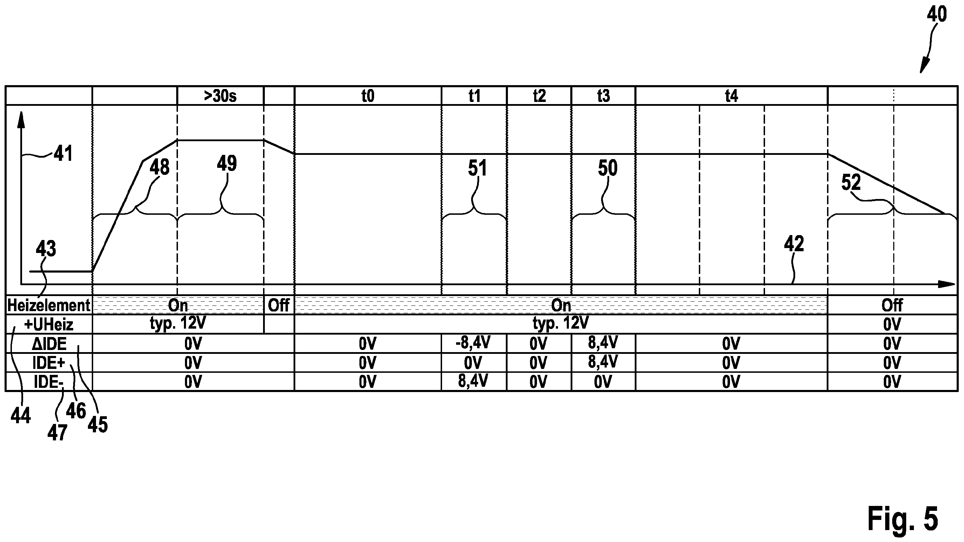

Eine Betriebsart ermöglicht innerhalb der zusätzlich eingeführten Umpolarisierungsphase 51 eine Potentialumkehr bei den IDE-Elektroden 23, wie dies im Verlaufsdiagramm 40 in Figur 5 dargestellt ist, so dass sich zwischen den IDE-Elektroden 23 für den Zeitraum t₁ der Umpolarisierungsphase 51 eine Spannungsdifferenz von typ. -8,4 V ergibt. Die negative IDE-Spannungsdifferenz bedeutet, dass die negative Elektrode zwischenzeitlich auf 8,4 V und die positive Elektrode auf 0 V liegt. Vor der Diagnose, also während des Zeitraums t₂, kann vorzugsweise eine Phase mit einer Spannung von Null Volt an beiden Elektroden eingeführt werden wie in Figur 5 gezeigt. Da in der Regenerationsphase hohe Heizleistungen erforderlich sind, ist das PWM-Tastverhältnis sehr hoch. Die Heizelement-Spannung liegt überwiegend auf 12 V. Die sehr kurzen Ausphasen sind hierbei vernachlässigt.

Durch den Umkehrpuls lassen sich nun die Na⁺-Ionen über den gesamten Bereich der IDE-Meßstruktur 22 des Partikelsensors 20 gezielt zur positiven IDE-Elektrode 23 (IDE+) verschieben. Dies ist insbesondere wirksam in der Isolationsschicht zwischen den Elektrodenfingern der negativen IDE-Elektrode 23 (IDE-) und der positiven IDE-Elektrode 23 (IDE+) an der Oberfläche und in oberflächennahen Schichten. Die Dauer kann prinzipiell frei gewählt werden. Um jedoch nicht die Gesamtzykluszeit des Partikelsensors 20 signifikant zu verlängern, sollten kurzzeitige Umkehrpulse mit einer Dauer von < 1 s verwendet werden. Infolge der geringen Abstände der Elektrodenfinger reicht diese Zeit aus. Die Rückpolarisierung durch Umpolung und Polarisierung während der Eigendiagnose sollen sich kompensieren. Daher hat der Umkehrpuls vorzugsweise die gleiche Dauer wie die Dauer der Eigendiagnose. Dabei besteht hier auch die Möglichkeit, wie dies aus der DE 10 2009 028 239 A1 bekannt ist, während der Eigendiagnose (Diagnosephase 50) kurzzeitige Umpolungen vorzunehmen, womit Polarisationseffekte während der Strommessung und damit Fehlmessungen vermieden werden können.

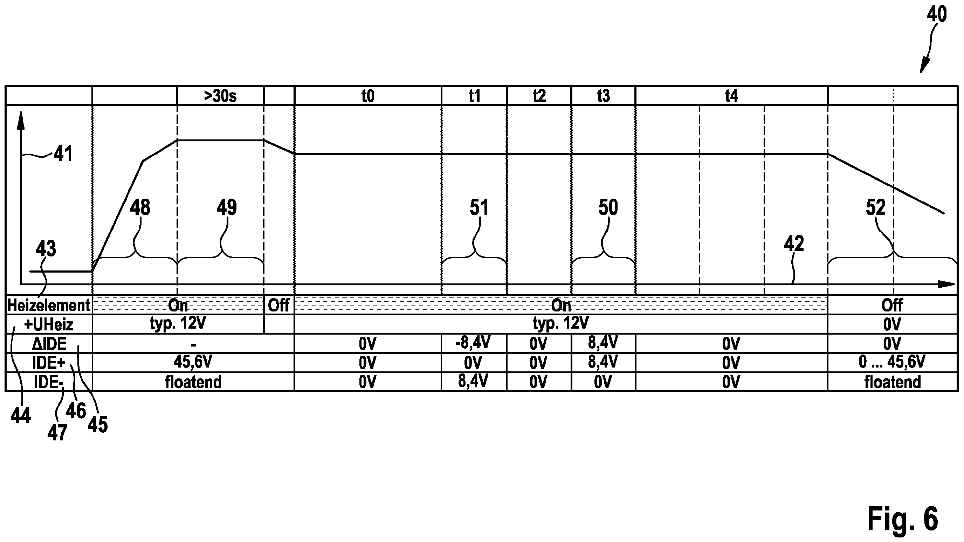

Erfindungsgemäß können weitere Betriebsphasen durch veränderliche Elektrodenpotentiale IDE+ bzw. IDE- 46, 47 gemäß den in den Figuren 6 bis 9 dargestellten Beispielen eingeführt werden, womit neue bzw. unterschiedliche elektrische Potentialverhältnisse im Partikelsensor 20 während der Regenerationsphase erzeugt werden können.

Das positive Heizelementpotential ist dabei gleich hoch oder niedriger als das Elektrodenpotential IDE+ 46, so dass die treibende Kraft für die Kationen, d.h. im Wesentlichen die Na⁺-Ionen, in die gewünschte Richtung, gemäß Figur 2 von der Oberfläche zurück in den Bulk des Partikelsensors 20 (in Richtung -y) geht, oder dass die Kationen keine treibende Kraft erfahren und daher an der bisherigen Stelle verharren. Da die Regenerationsphasen typischerweise zwischen 30 und 90 s andauern, steht somit ein verhältnismäßig langer Zeitraum für die Betriebsart und ihre Varianten zur Verfügung. Dabei kann auch die in Figur 5 beschriebene Umpolarisierung innerhalb der Umpolarisierungsphase 51 während dieser Zeit integriert werden.

Die Ionen können während dieser Phase gezielt entweder auf ihrer Position gehalten werden, von der Oberfläche zurück in den Bulk und ggf. auch vom Bulk an die Oberfläche getrieben werden. Dies kann mit einem fest vorgegebenen Profil realisiert werden oder kann, wie dies eine Variante des Verfahrens vorsieht, auch in Abhängigkeit des aktuellen Zustandes im Bereich der Elektroden, z.B. in Abhängigkeit vom aktuellen Diagnosestrom, durchgeführt werden. Letztlich kann damit eine Sollkonzentration bzw. ein Sollbereich an Natriumionen im Bereich der Elektroden und oberflächennahen Schichten eingestellt werden. Dies kann zeitlich variabel sein, so dass vorzugsweise nur für die Zeit während der Eigendiagnose eine hinreichende Konzentration oberflächennah zur Darstellung der erforderlichen Leitfähigkeit vorhanden ist und ansonsten die Ionen zurück in den Bulk geschoben werden. Im Falle von überhöhtem Eintrag an Ionen, messbar über den Diagnosestrom, können diese tiefer in den Bulk getrieben und dort gehalten werden. Die Figuren 6, 7 und 8 zeigen entsprechende Beispiele, bei denen während der Regenerationsphase, hier während der Aufheizphase 48 und der Haupt-Rußverbrennungsphase 49, unterschiedliche Elektrodenpotentiale IDE+ bzw. IDE- 46, 47 vorgegeben werden, wobei auch nach dem Abschalten des Heizelementes 26 auf 0 V in der Abkühlphase 52 abweichende Elektrodenpotentiale IDE+ bzw. IDE-46, 47 im Profil vorgebbar sind. Dabei sind die eingetragenen Zeitabschnitte t₀ bis t₄ typischerweise sehr viel kürzer als 30 s, d.h. die Zeitskala ist hier nicht linear bzw. maßstäblich dargestellt. Die Heizelementspannung 44 kann dabei bei PKW's typisch bei 12 V und für Nutzfahrzeuge (NKW's) bei 8 V liegen.

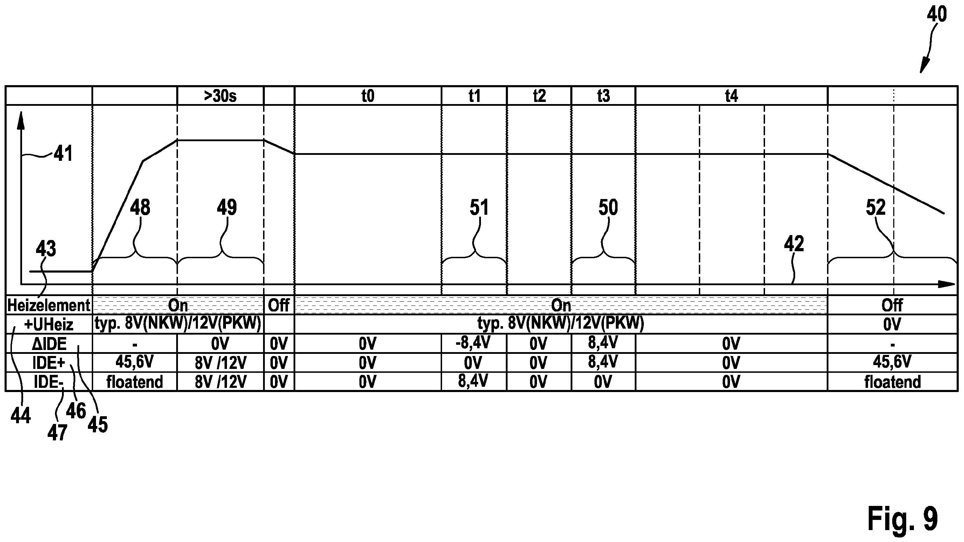

Eine besonders vorteilhafte Verfahrensvariante zeigt die Figur 9 mit einem zeitlich angepassten Profil. Während der Aufheizphase 48 werden mit den gewählten Potentialeinstellungen zunächst die Na⁺-Ionen in den Bulk des Partikelsensors getrieben. Dies erfolgt durch Anlegen eines recht hohen Elektrodenpotentials IDE+ 46 von etwa 45,6 V, wobei das Elektrodenpotentials IDE- 47 frei floatend ist. Während der daran anschließenden Rußverbrennungsphase 49 wird an beiden Elektroden eine Spannung von 8 V (NKW) bzw. 12 V (PKW) angelegt. Damit kann erreicht werden, dass die Na⁺-Ionen im Bulk gehalten werden. Durch einen anschließenden Wechsel beider Elektrodenpotentiale auf 0 V kann erreicht werden, dass die Na⁺-Ionen kurzzeitig in Richtung Oberfläche geschoben werden können. Durch die später folgende Umpolarisierungsphase 51 sind genügend Na⁺-Ionen oberflächennah angesammelt, dass während der Diagnosephase 50 der Strom fehlerfrei gemessen werden kann. Nach Abschluss der Regenerationsphase (Heizelement off) wird wie zu Beginn der Regenerationsphase innerhalb der Aufheizphase 48 ein hohes Elektrodenpotential IDE+ 46 von etwa 45,6 V angelegt, wobei das Elektrodenpotential IDE- 47 frei floatend ist. Dadurch werden die Na⁺-Ionen in den Bulk des Partikelsensors getrieben, so dass eine Auswaschung, wie eingangs erwähnt, und somit eine übermäßige Sensoralterung verhindert werden kann.

Neben den vier dargestellten Beispielen in Figur 6 bis 9 sind weitere Möglichkeiten denkbar, wie z.B. ein alternierender Betrieb mit einem oder mehreren Pulsen von typisch 8 bis 13 V oder 45,6 V an der IDE+-Elektrode mit zwischenzeitlich einem Potential von 0 V, wobei die Pulslänge auch in Abhängigkeit eines gemessenen Diagnosestroms eingestellt werden kann. Weiterhin können auch während der Zeiträume t0 und t4 von Null Volt abweichende Spannungspotentiale wie beschrieben für die anderen Phase während der Regeneration an den IDE-Elektroden zeitweise oder dauerhaft angelegt werden. Die zuvor beschriebenen Betriebsarten gemäß Figur 5 und den Figuren 6 bis 9 können einzeln oder kombiniert angewendet werden.

## Patentansprüche

1. Verfahren zum Betreiben eines Partikelsensors (20) zur Bestimmung eines Partikelgehalts in einem Gasstrom, wobei der Partikelsensor (20) auf seiner Oberfläche mindestens zwei ineinander greifende interdigitale Elektroden (23) und ein, durch eine Isolationsschicht von den Elektroden (23) getrenntes Heizelement (26) aufweist, das über zwei Heizelementanschlüsse (25) mit einem Massepotential (0V) einerseits und einer positiven Heizelement-Spannung (+H) andererseits verbunden ist, mit dem der Partikelsensor (20) in einer Regenerationsphase aufgeheizt werden kann und dabei eine Rußbeladung am Partikelsensor (20) entfernt werden kann, und mit dem in einer Diagnosephase (50) während der Regenerationsphase durch zeitweises Anlegen einer Messspannung an die Elektroden (23) ein Strom gemessen wird und anhand dessen zeitlicher Verlauf und Höhe eine Funktionsüberprüfung des Partikelsensors (20) durchgeführt wird, **dadurch gekennzeichnet, dass** während der Regenerationsphase zusätzliche Betriebsphasen eingeführt werden, in denen außerhalb der Diagnosephase (50) durch zeitweises Anlegen bestimmter, von Null Volt verschiedener Spannungspotentiale an die Elektroden (23) gezielt Natrium-Ionen, die sich in den Schichtbereichen zwischen den Elektroden (23) und dem Heizelement (26) befinden, verschoben werden, indem während der zusätzlichen Betriebsphasen die elektrischen Potentiale der Elektroden (23) gleich hoch oder höher als die Heizelement-Spannung (+H) eingestellt werden.

2. Verfahren nach Anspruch 1, **dadurch gekennzeichnet, dass** für eine bestimmte, vorgebbare Zeit während einer Umpolarisierungsphase (51) zeitlich vor der Diagnosephase (50) ein positives Spannungspotential an die negative Elektrode (23) angelegt wird, wobei die positive Elektrode (23) auf einem Masse-Potential liegt.

3. Verfahren nach Anspruch 2, **dadurch gekennzeichnet, dass** eine Zeitdauer für die Umpolarisierungsphase (51) gewählt wird, die maximal der Zeitdauer der Diagnosephase (50) entspricht.

4. Verfahren nach Anspruch 1, **dadurch gekennzeichnet, dass** während dieser Betriebsphasen die negative Elektrode (23) zwischen einem floatenden und einem gegenüber der positiven Heizelement-Spannung (44) höheren Spannungspotential umschaltbar ist und die positive Elektrode (23) während dieser Zeitdauer mit einem gegenüber der positiven Heizelement-Spannung (44) gleich hohen oder höherem Spannungspotential betrieben wird.

5. Verfahren nach Anspruch 1 oder 4, **dadurch gekennzeichnet, dass** das Spannungspotential an der positiven Elektrode (23) zwischen 8 bis 13 Volt oder größer 40 V beträgt.

6. Verfahren nach einem der Ansprüche 1, 4 oder 5, **dadurch gekennzeichnet, dass** die Spannungspotentiale an den Elektroden (23) mit Ausnahme der Diagnosephase (50) und der Umpolarisierungsphase (51) während der gesamten Regenerationsphase oder zeitweise angelegt werden.

7. Verfahren nach einem der Ansprüche 1 bis 6, **dadurch gekennzeichnet, dass** die zusätzlichen Betriebsphasen innerhalb der Regenerationsphase des Partikelsensors (20) hinsichtlich der an die Elektroden (23) angelegten Spannungspotentiale und der Zeitdauer fest vorgegeben oder in Abhängigkeit des aktuellen Zustandes der Elektroden (23) adaptiert werden.

8. Anwendung des Verfahrens nach einem der vorhergehenden Ansprüche im Rahmen einer On-Board-Diagnose des Partikelsensors (20), der im Abgasstrang (17) einer als Diesel-Motor oder als Otto-Motor ausgeführten Brennkraftmaschine (1) zur On-Board-Diagnose eines Partikelfilters angeordnet ist oder zur Messung von Ruß-Rohemissionen verwendet wird.

## Claims

1. Method for operating a particle sensor (20) in order to determine a particle content in a gas flow, wherein the particle sensor (20) comprises on its surface at least two interdigital electrodes (23) engaging in one another and a heating element (26), which is separated from the electrodes (23) by an insulation layer, and which is connected via two heating element terminals (25) to a ground potential (0V), on the one hand, and a positive heating element voltage (+H), on the other hand, and by which, in a regeneration phase, the particle sensor (20) can be heated and a soot load on the particle sensor (20) can thereby be removed, and with which, in a diagnostic phase (50) during the regeneration phase, a current is measured by intermittently applying a measurement voltage to the electrodes (23) and, with the aid of the profile and strength of this current as a function of time, a functional test of the particle sensor (20) is carried out, **characterized in that**, during the regeneration phase, additional operating phases are introduced in which, outside the diagnostic phase (50), sodium ions which are in the layer regions between the electrodes (23) and the heating element (26) are deliberately displaced by intermittently applying certain voltage potentials different to zero volts to the electrodes (23) by virtue of the fact that, during the additional operating phases, the electrical potentials of the electrodes (23) are set to be equal to or greater than the heating element voltage (+H).

2. Method according to Claim 1, **characterized in that**, for a particular predeterminable time during a polarization reversal phase (51) preceding the diagnostic phase (50), a positive voltage potential is applied to the negative electrode (23), the positive electrode (23) being at a ground potential.

3. Method according to Claim 2, **characterized in that** a duration which corresponds at most to the duration of the diagnostic phase (50) is selected for the polarization reversal phase (51).

4. Method according to Claim 1, **characterized in that**, during these operating phases, the negative electrode (23) can be switched between a floating voltage potential and a voltage potential higher than the positive heating element voltage (44), and the positive electrode (23) is operated during this time with a voltage potential equal to or higher than the positive heating element voltage (44).

5. Method according to Claim 1 or 4, **characterized in that** the voltage potential at the positive electrode (23) is between 8 and 13 volts or more than 40 V.

6. Method according to one of Claims 1, 4 and 5, **characterized in that** the voltage potentials at the electrodes (23), with the exception of the diagnostic phase (50) and the polarization reversal phase (51), are applied throughout the entire regeneration phase or intermittently.

7. Method according to one of Claims 1 to 6, **characterized in that**, in terms of the voltage potentials applied to the electrodes (23) and duration, the additional operating phases within the regeneration phase of the particle sensor (20) are fixed in advance or adapted as a function of the present state of the electrodes (23).

8. Use of the method according to one of the preceding claims in the scope of on-board diagnosis of the particle sensor (20), which is arranged in the exhaust gas system (17) of an internal combustion engine (1) configured as a diesel engine or as an Otto engine for on-board diagnosis of a particle filter, or is used for measuring raw soot emissions.

## Revendications

1. Procédé pour faire fonctionner un capteur de particules (20) servant à déterminer la teneur en particules d'un courant gazeux, dans lequel le capteur de particules (20) comporte sur sa surface au moins deux électrodes interdigitées (23) et un élément chauffant (26), séparé des électrodes (23) par une couche isolante, qui est relié par l'intermédiaire de deux bornes d'élément chauffant (25) d'une part à un potentiel de masse (0V) et d'autre part, à une tension d'élément chauffant positive (+H) au moyen duquel le capteur de particules (20) peut être chauffé pendant une phase de régénération et permettant ainsi d'éliminer une charge de suie présente sur le capteur de particules (20), et au moyen duquel, au cours d'une phase de diagnostic (50), pendant la phase de régénération, un courant est mesuré en appliquant temporairement une tension de mesure aux électrodes (23) et un contrôle du fonctionnement du capteur de particules (20) est effectué sur la base de sa variation et de son intensité au cours du temps, **caractérisé en ce que**, pendant la phase de régénération, des phases de fonctionnement supplémentaires sont introduites, au cours desquelles, en-dehors de la phase de diagnostic (50), des ions azote se trouvant dans les couches comprises entre les électrodes (23) et l'élément chauffant (26), sont déplacés de manière ciblée par application temporaire aux électrodes (23) de potentiels de tension déterminés différents de zéro volt, en réglant les potentiels électriques des électrodes (23) à une valeur égale ou supérieure à la tension (+H) de l'élément chauffant pendant les phases de fonctionnement supplémentaires.

2. Procédé selon la revendication 1, **caractérisé en ce qu'**un potentiel de tension positif est appliqué à l'électrode négative (23) au cours d'un temps déterminé pouvant être spécifié à l'avance, pendant une phase d'inversion de polarité (51) et avant la phase de diagnostic (50), dans lequel l'électrode positive (23) se trouve à un potentiel de masse.

3. Procédé selon la revendication 2, **caractérisé en ce qu'**on sélectionne une durée de la phase d'inversion de polarité (51) qui correspond au plus à la durée de la phase de diagnostic (50).

4. Procédé selon la revendication 1, **caractérisé en ce que**, pendant lesdites phases de fonctionnement, l'électrode négative (23) peut être commutée entre un potentiel flottant et un potentiel de tension supérieur à la tension d'élément chauffant positive (44) et l'électrode positive (23) est mise en fonctionnement pendant cette période avec un potentiel de tension égal ou supérieur à la tension d'élément chauffant positive (44) .

5. Procédé selon la revendication 1 ou 4, **caractérisé en ce que** le potentiel de tension au niveau de l'électrode positive (23) est compris entre 8 et 13 volts ou est supérieur à 40 V.

6. Procédé selon l'une des revendications 1, 4 ou 5, **caractérisé en ce que** les potentiels de tension sont appliqués aux électrodes (23) pendant toute la phase de régénération ou temporairement, à l'exclusion de la phase de diagnostic (50) et de la phase d'inversion de polarité (51) .

7. Procédé selon l'une des revendications 1 à 6, **caractérisé en ce que** les phases de fonctionnement supplémentaires, au cours de la phase de régénération du capteur de particules (20), sont prédéterminées de manière fixe par rapport aux potentiels de tension appliqués aux électrodes (23) et à la durée, ou sont adaptées en fonction de l'état actuel des électrodes (23) .

8. Application du procédé selon l'une des revendications précédentes dans le cadre d'un diagnostic embarqué du capteur de particules (20), qui est disposé dans le conduit d'échappement (17) d'un moteur à combustion interne (1) réalisé sous la forme d'un moteur diesel ou à essence, pour le diagnostic embarqué du filtre à particules, ou est utilisé pour la mesure des émissions brutes de suie.
